(19) Europäisches Patentamt
European Patent Office
Office européen des brevets

(11) **EP 4 358 202 A1**

(12) **EUROPEAN PATENT APPLICATION**
published in accordance with Art. 153(4) EPC

(43) Date of publication:
**24.04.2024 Bulletin 2024/17**

(21) Application number: **21964375.6**

(22) Date of filing: **18.11.2021**

(51) International Patent Classification (IPC):
***H01M 10/04*** *(2006.01)*

(52) Cooperative Patent Classification (CPC):
**H01M 10/04; Y02E 60/10; Y02P 70/50**

(86) International application number:
**PCT/CN2021/131506**

(87) International publication number:
**WO 2023/087217 (25.05.2023 Gazette 2023/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde, Fujian 352100 (CN)**

(72) Inventors:
• WU, Yiyang
  **Ningde, Fujian 352100 (CN)**
• YE, Yonghuang
  **Ningde, Fujian 352100 (CN)**
• WANG, Yuwen
  **Ningde, Fujian 352100 (CN)**

(74) Representative: **Ran, Handong et al**
**Maucher Jenkins**
**Seventh Floor Offices**
**Artillery House**
**11-19 Artillery Row**
**London SW1P 1RT (GB)**

(54) **BATTERY CELL, FABRICATION METHOD THEREFOR, FABRICATION DEVICE, BATTERY, AND ELECTRICAL APPARATUS**

(57) Embodiments of the present application provide a battery cell, a fabrication method therefor, a fabrication device, a battery, and an electrical apparatus. The battery cell comprises: a housing, which is provided with an opening that is arranged facing a first direction; an end cover assembly, which is configured to close an opening, the end cover assembly comprising an end cover body and two electrode terminals which are provided on the end cover body and which have opposite polarities; and at least two groups of electrode assemblies, which are provided side by side in the housing along a second direction, the second direction being perpendicular to the first direction, each group of electrode assemblies among the at least two groups of electrode assemblies comprising at least one electrode assembly, and the electrode assemblies each comprising a main body portion and two tabs which are led out from the main body portion and which have opposite polarities, wherein two tabs that are close to one another in every two adjacent groups of electrode assemblies have the same polarity and are jointly connected to an electrode terminal with the same polarity, and two tabs that are far from one another in every two adjacent groups of electrode assemblies have the same polarity and are separately connected to an electrode terminal with the same polarity.

FIG. 3

EP 4 358 202 A1

**Description**

**TECHNICAL FIELD**

The present application relates to the technical field of batteries, and more particularly, relates to a cell and a manufacturing method thereof, a device for manufacturing the cell, and an electrical device.

**BACKGROUND**

With the advantages of high energy density, high power density, many times of cycles of usage, and long storage time, lithium-ion batteries have been widely used in electric vehicles.
However, how to improve battery performances of the batteries in electric vehicles has always been a bottleneck in this field.

**SUMMARY**

The present application aims at improving performances of the batteries.
In accordance with the first aspect of the present application, a cell is provided. The cell includes:

a housing which has an opening arranged to be orientated towards a first direction (Z);
an end cover assembly configured to cover the opening, the end cover assembly includes an end cover body and two kinds of electrode terminals arranged on the end cover body and having opposite polarities; and
at least two groups of electrode assemblies arranged in parallel in a second direction perpendicular to the first direction in the housing; each group of the at least two groups of electrode assemblies includes at least one electrode assembly, and the electrode assembly includes a main part and two kinds of battery tabs which have opposite polarities and are led out from the main part.

Two adjacent battery tabs in every two adjacent groups of electrode assemblies have the same polarity and are connected in common to an electrode terminal having the same polarity, and two kinds of battery tabs being far away from each other in every two adjacent groups of electrode assemblies have the same polarity and are connected to an electrode terminal having the same polarity, respectively.
In this embodiment, at least two groups of electrode assemblies are arranged in parallel in the second direction inside the housing of the cell. There is no need to increase the size of the electrode assembly in the thickness direction, increasing of a heat dissipation path inside the electrode assembly is avoided. The heat dissipation effect may be improved on the basis of increasing of the capacity of the cell. Moreover, there is no need to manufacture larger electrode assembly, the difficulty in manufacturing and the rate of defective products are reduced, and the quality and manufacturing efficiency of cell are improved accordingly.
Moreover, the adjacent battery tabs in every two adjacent groups of electrode assemblies have the same polarity and are connected in common to an electrode terminal having the same polarity, this arrangement at least has the following advantages: two kinds of battery tabs having the same polarity in two adjacent groups of electrode assemblies can be connected together, a length of a connecting piece used for connecting the battery tabs having the same polarity is shortened, an electrical connection structure of the cell is simplified, and an internal resistance of the cell is reduced either. The battery tabs having different polarities are located in relatively independent regions in the second direction, a risk of short circuit is reduced and the safety of operation of the cell is improved. The battery tabs having the same polarity in two adjacent groups of electrode assemblies can be conveniently connected without considering an avoidance problem when battery tabs having different polarities are connected. The battery tabs are allowed to be bent, the space occupied by the battery tabs in the first direction can be reduced, and energy density of the cell is increased. Due to the close distance between the battery tabs having the same polarity in the two adjacent groups of electrode assemblies, when the battery tabs are connected in common to the electrode terminals having the same polarity, the distances travelled by the electrons when the electrons are transmitted to the electrode terminals through the different battery tabs are closer, the heat generation may be reduced, conduction and distribution of heat are facilitated, a risk of temperature rise of the cell is reduced, and the security of operation of the cell is improved.
In some embodiments, a sum of the number of all electrode terminals in the two kinds of electrode terminals is N1, and a number of the at least two groups of electrode assemblies is N2. N1 is an odd number greater than or equal to 3, and N2 is an even number greater than or equal to 2.
In some embodiments, the sum of the number of all electrode terminals in the two kinds of electrode terminals is N1, and a number of a group of the at least two groups of electrode assemblies is N2, and N1 and N2 meet a relational expression: N1-N2=1.

In this embodiment, the battery tabs having the same polarity in two adjacent groups of electrode assemblies are enabled to be connected to the same electrode terminal, the battery tab located at the outermost is separately connected to one electrode terminal, which is conducive to conveniently connecting the battery tabs having the same polarity in two adjacent groups of electrode assemblies together, the inner electrical connection structure of the cell is simplified, and the number of electrode terminals is minimized.

In some embodiments, all electrode terminals of the two kinds of electrode terminals are arranged to be spaced apart from each other in the second direction, and each electrode terminal and a battery tab connected to the electrode terminal are oppositely arranged in the first direction.

In this embodiment, an electrode terminal can be enabled to be close to a battery tab connected to the electrode terminal and the electrical connection between the electrode terminal and the battery tab is facilitated. A direct connection is prone to be implemented when a lead out length of the battery tabs is appropriate. Alternatively, even if an adapter is used to connect the electrode terminal with the battery tab, the size of the adapter can be reduced, and the effective connection area between the electrode terminal and the battery tab can also be increased, an overcurrent capacity of the cell is improved.

In some embodiments, the two kinds of battery tabs are led out in a direction towards the end cover assembly.

In this embodiment, considering that multiple groups of electrode assemblies are arranged in parallel in the second direction in the cell, a larger size of the cell in the second direction is caused. By guiding the two kinds of battery tabs in the direction towards the end cover component, additional space occupied by the battery tabs in the second direction may be avoided, and the spacing between two adjacent groups of electrode assemblies can be reduced and the size of the cell in the second direction is minimized accordingly, the size ratio in all directions are balanced on the basis that the performance requirement of the cell having large capacity are met. Moreover, this method for leading out the battery tabs can simplify the structure of the adapter and reduce an assembly difficulty. In addition, the arrangement of leading out the two kinds of battery tabs from the same side of the main body can reduce the space occupied by the battery tabs in the first direction and increase the energy density of the cell.

In some embodiments, the cell further includes: a first adapter and a second adapter. Two adjacent battery tabs in the two adjacent groups of electrode assemblies are connected to an electrode terminal having the same polarity through the first adapter, and two kinds of battery tabs being far away from each other in the two adjacent groups of electrode assemblies are connected to an electrode terminal having the same polarity through the second adapter, respectively.

In this embodiment, the battery tab is connected to the electrode terminal through the adapter, the battery tab can not only match the height of the electrode terminal extending into the housing in the first direction, the two kinds of battery tabs can also be connected through the adapter and the electrode terminal can be enabled to connect to the adapter to increase the effective electrical connection region, when the electrode terminal is connected to the two adjacent battery tabs in the two adjacent groups of electrode assemblies. A connection between two kinds of battery tabs is facilitated when the distance between the two kinds of battery tabs is relatively longer. If welding is applied, the frequency of transition joint welding is reduced, the resistance in the current circuit is reduced accordingly, and the electrode assembly can also be avoided from being burned by welding energy, the quality of assembling is improved.

In some embodiment, the electrode assembly has a winding structure, and a winding axis of the electrode assembly is arranged in the first direction.

In this embodiment, the winding axis of the electrode assembly is arranged in the first direction, such that electrolytes can be evenly infiltrated into the ends of the electrode assembly to realize uniformity of conductivity of all positions of the first electrode piece and the second electrode piece, and the performance of the cell is improved.

In some embodiments, the electrode assembly has a flat surface and an arc surface, the flat surface of the electrode assembly is arranged to be perpendicular to a third direction, and the third direction is perpendicular to the second direction and the first direction, two arc surfaces of every two adjacent groups of electrode assemblies are oppositely arranged in the second direction.

In this embodiment, a winding electrode assembly is adopted, mechanized production is prone to be realized, and the uniformity is better ensured, mass production is facilitated. Moreover, as compared to the arrangement of laminating the multiple groups of electrode assemblies in the thickness direction, the multiple groups of electrode assemblies is arranged in parallel in the direction perpendicular to the thickness direction of the electrode assembly, the heat dissipation effect can be improved while the cell having large capacity is achieved, the service life, the reliability and the safety of the battery are improved during fast charging or long-term use of the battery. A problem of reduction of the manufacturing efficiency and the successful rate of the electrode assembly due to long stroke of electrode piece can also be solved.

In some embodiments, the electrode assembly has a laminated structure. The electrode assembly includes a first electrode piece and a second electrode piece having opposite polarities and arranged to be laminated in a third direction. The third direction is perpendicular to the second direction and the first direction.

In this embodiment, laminated electrode assemblies are used, the arrangement of the sizes of the electrode assemblies is flexible. The first electrode piece and the second electrode piece may be cut into rectangular structures, which can better occupy the space in the housing and improve the energy density of the cell. Moreover, as compared to laminating the multiple groups of electrode assemblies in the thickness direction, the multiple groups of electrode assemblies are arranged in parallel in the direction perpendicular to the thickness direction of the electrode assembly, the heat dissipation effect can be improved while the cell having large capacity is realized, the service life, the reliability, and the safety of the battery can be improved during fast charging or long-term use of the battery.

In some embodiments, each group of electrode assemblies includes a plurality of electrode assemblies. The plurality of electrode assemblies are arranged to be laminated in a third direction, the third direction is perpendicular to the second direction and the first direction.

In this embodiment, each group of electrode assemblies is arranged, such that the multiple electrode assemblies are laminated in the third direction. The capacity of the cell can be increased and the heat dissipation requirement can be satisfied, under the condition that the thickness of one single electrode assembly is constant. Moreover, when the thickness of a group of electrode assemblies is constant, the length of the electrode pieces in the winding electrode assembly can be reduced, or the number of laminated layers of the electrode pieces in the laminated electrode assemblies can be reduced.

In some embodiments, the cell includes two groups of electrode assemblies, the two kinds of electrode terminals include a first electrode terminal and two second electrode terminals arranged to be spaced in the second direction. The first electrode terminal is arranged to be located between the two second electrode terminals, the two kinds of battery tabs of the electrode assembly include first battery tabs and second battery tabs.

Two first battery tabs of the two groups of electrode assemblies are arranged to be adjacent to each other and are connected to the first electrode terminal, and two second battery tabs of the two groups of electrode assemblies are located at two sides of the first battery tab in the second direction, and are connected to the second electrode terminal on the same side, respectively.

In this embodiment, two groups of electrode assemblies are arranged in parallel in the second direction in the cell, this arrangement can improve the heat dissipation effect and increase the capacity of the cell. Moreover, the first electrode terminal and two second electrode terminals located on two sides are arranged to be spaced apart from each other in the second direction, and each electrode terminal is electrically connected to one battery tab in the corresponding region, such that an arrangement of a complex electrical connection structure in the cell can be avoided, the structure is simplified, the cell is prone to be assembled, and the risk of short circuit is reduced, the safety of the operation of the cell can be improved. In addition, on the basis of increasing of the capacity of the cell, a size ratio of the cells in the three orthogonal directions can be balanced as much as possible, an overall strength of the cell is ensured, and deformation of the cell can be avoided during use.

In some embodiments, the cell further includes at least one partition plate located in the housing. The at least one partition plate is configured to separate a space in the housing into at least two accommodating cavities in the second direction, and the at least two groups of electrode assemblies are located in the at least two accommodating cavities correspondingly.

In this embodiment, the electrode assembly can be located and limited by arranging the partition plate, shaking and interference between multiple groups of electrode assemblies can be avoided during use, the positions of the electrode assembly are more stable, collisions that may cause the active substance on the electrode to fall off and affect the performance are avoided, or a disengagement of the position of the electrical connection between the battery tab and the electrode terminal due to frequent misalignment is avoided. The insulation performance between two adjacent electrode assemblies can also be ensured, and the reliability of operation of the cell is improved accordingly.

In some embodiments, at least one partition plate is connected to the housing.

In this embodiment, the partition plate is connected to the housing, such that the position between the partition plate and the housing can be relatively fixed, the electrode assembly can be better located and limited. Moreover, due to the fact that at least two groups of electrode assemblies are arranged in parallel in the second direction in the housing, the size of the housing in the first direction is increased. The arrangement of the partition plate can support the housing, strengthen the overall strength of the housing, and prevent the housing from being deformed during storing, transportation, assembling and use of the cell, assembly quality and the reliability of usage of the cell are improved.

Moreover, according to the arrangement of the partition plate, the rigidity of the part of the housing between the two adjacent groups of electrode assemblies can be strengthened, expansion processes of different groups of electrode assemblies are independent of each other and a mutual influence is avoided. The partition plate ensures that pressure forces are applied to all parts of the electrode assembly uniformly during use, when expansion force is applied to the electrode assembly. Thus, uniform distribution of currents in the electrode assembly can be realized, the "capacity diving" is avoided, and the service life of the cell is prolonged accordingly.

In some embodiments, adjacent accommodating cavities are interconnected with each other.

In this embodiment, the adjacent accommodating cavities are arranged to be interconnected, which allows electrolytes between different accommodating cavities to flow through each other, the volumes of the electrolytes in different accommodating cavities are balanced, the concentrations of the electrolytes in different accommodating cavities are homogeneous. Thus, the charging and discharging processes of the electrode assemblies in different accommodating cavities can be more balanced during the operation of the cell. Moreover, during the operation of the cell, according to the flow of the electrolyte, heat distribution in different accommodating cavities can also be balanced, and too high local temperature rise can be avoided.

In one embodiment, a thickness of the partition plate is greater than a thickness of the housing.

In this embodiment, by increasing the thickness of the partition plate, the rigidity of the central position of the housing be strengthened, the partition plate ensures that pressure forces are applied to all parts of the electrode assembly uniformly during use, when expansion force is applied to the electrode assembly, the "capacity diving" is avoided, and the service life of the cell is prolonged accordingly.

In some embodiments, a first end of the partition plate being away from the end cover component has a first preset distance H1 from a bottom wall of the housing, and the bottom wall of the housing is arranged to be opposite to the end cover component in the first direction.

In this embodiment, by arranging the first preset distance H1 between the partition plate and the bottom wall of the housing, this arrangement allows the accommodating cavities at two sides of the partition plate to be intercommunicated, and allows the electrolytes in the accommodating cavities at the two sides of the partition plate to flow freely, flow resistance is reduced, and the volume and the concentration of electrolytes can be better balanced.

In some embodiments, the two kinds of battery tabs are led out towards the end cover assembly, and a second end of the partition plate adjacent to the end cover assembly is lower than an end surface of the main part by a second preset distance H2. The end surface of the main part is configured to lead out the two kinds of battery tabs.

In this embodiment, the partition plate is lower than the main part, an occurrence of short circuit caused due to contacting between the battery tab and the partition plate when the battery tab is bent can be avoided, and an occurrence of short- circuiting caused due to contacting of the partition plate and the first adapter is avoided, the safety of operation of the cell can be improved.

In some embodiments, a ratio of a first size L1 of the cell in the second direction to a second size L2 of the cell in the third direction is in a range between 8 and 130. The third direction is perpendicular to the second direction and the first direction.

In this embodiment, in order to increase the capacity of the cell, multiple groups of electrode assemblies are arranged in parallel in the second direction of the cell, by increasing the size of the cell in the second direction, the size of the cell in the third direction can be reduced. This slender cell can not only meet the requirement of large capacity, but also optimize the heat dissipation effect, and has good usability.

In some embodiments, the electrode assembly includes a first electrode piece and a second electrode piece which are arranged to be laminated. The second electrode piece is a negative electrode piece, and a part of the negative electrode piece configured for forming the main part is coated with a negative active substance, and a coating weight CW of the negative electrode active substance and a thickness THK of the housing meet a relational expression listed below:

$$2.53 < 30/THK + 0.135CW < 4.53.$$

The cell in this embodiment can achieve the technical effects of an increase in fast charging capacity and a temperature rise that does not exceed a preset threshold.

In accordance with the second aspect of the present application, a battery is provided, the battery includes the cell in the embodiments described above.

In some embodiments, the battery includes a battery module. The battery module includes a plurality of cells which include a first cell and a second cell arranged alternately in the third direction. The third direction is perpendicular to the second direction and the first direction, the electrode terminals of the first cell and the second cell located at the same position in the second direction have opposite polarities.

All groups of electrode assemblies located at the same position in the second direction in the first cell and the second cell are sequentially connected in series to form an electrode string, and all electrode strings located at different positions in the second direction in the first cell and the second cell are arranged in parallel.

In accordance with the third aspect of the present application, an electrical device is provided. The electrical device includes the battery in the aforesaid embodiment, the battery is configured to supply electrical energy to the electrical device.

In accordance with the fourth aspect of the present application, a manufacturing method for a cell is provided. The method includes:

an electrode providing step of providing at least two groups of electrode assemblies; each group of electrode assemblies in the at least two groups of electrode assemblies includes at least one electrode assembly, and the electrode assembly includes a main part and two kinds of battery tabs having opposite polarities and led out from the main part;

an electrode placement step of placing at least two groups of electrode assemblies in parallel in a second direction inside the housing; the housing has an opening orientated towards the first direction, the second direction is perpendicular to the first direction, and two adjacent battery tabs in every two adjacent groups of electrode assemblies have the same polarity, two kinds of battery tabs being far away from each other in every two adjacent groups of electrode assemblies have the same polarity;

an end cover installation step of covering the opening of the housing with the end cover component; the end cover component includes an end cover body and two kinds of electrode terminals arranged on the end cover body and having opposite polarities; and

a terminal connection step of connecting two adjacent battery tabs in every two adjacent groups of electrode assemblies to an electrode terminal having the same polarity, and connecting two kinds of battery tabs being far away from each other in every two adjacent groups of electrode assemblies to an electrode terminal having the same polarity.

In accordance with the fifth aspect of the present application, a manufacturing device for manufacturing a cell is provided. This device includes:

an electrode providing device configured to provide at least two groups of electrode assemblies; each group of electrode assemblies in the at least two groups of electrode assemblies includes at least one electrode assembly, and the electrode assembly includes a main part and two kinds of battery tabs having opposite polarities and led out from the main part;

an electrode placement device configured to place at least two groups of electrode assemblies in parallel in a second direction inside the housing; the housing has an opening orientated towards the first direction, the second direction is perpendicular to the first direction, and two adjacent battery tabs in every two adjacent groups of electrode assemblies have the same polarity, two kinds of battery tabs being far away from each other in every two adjacent groups of electrode assemblies have the same polarity;

an end cover mounting device configured to cover the opening of the housing with the end cover component; the end cover component comprises an end cover body and two kinds of electrode terminals arranged on the end cover body and having opposite polarities; and

a terminal connection device configured to connect two adjacent battery tabs in every two adjacent groups of electrode assemblies to an electrode terminal having the same polarity, and to connect two kinds of battery tabs being far away from each other in every two adjacent groups of electrode assemblies to an electrode terminal having the same polarity.

## DESCRIPTION OF THE DRAWINGS

In order to describe the embodiments of the present application more clearly, a brief introduction regarding the accompanying drawings that need to be used for describing the embodiments of the present application is given below. It is appreciated that the accompanying drawings described below are merely some embodiments of the present application, a person of ordinary skill in the art may also acquire other drawings according to the current drawings without paying creative efforts.

FIG. 1 illustrates a schematic structural diagram of mounting a battery of the present application in a vehicle in accordance with some embodiments of the present application;
FIG. 2 illustrates a schematic structural diagram of a cell in accordance with some embodiments of the present application;
FIG. 3 illustrates a schematic disassembled diagram of the cell in accordance with some embodiments of the present application;
FIG. 4 illustrates a diagram of an appearance of the cell in accordance with some embodiments of the present application;
FIG. 5 illustrates a front view of the cell as shown in FIG. 4;
FIG. 6 illustrates a top view of the cell as shown in FIG. 4;
FIG. 7 illustrates a cross-section view of the cell in a A-A line shown in FIG. 6;
FIG. 8 illustrates a schematic structural diagram of an electrode assembly having a winding structure in accordance with some embodiments of the present application;

FIG. 9 illustrates a schematic structural diagram of an electrode assembly having a laminated structure in accordance with some embodiments of the present application;

FIG. 10 illustrates a schematic structural diagram of a battery module in accordance with some embodiments of the present application;

FIG. 11 illustrates a schematic diagram of polarity arrangement of an electrode terminal in the battery module shown in FIG. 10;

FIG. 12 is an equivalent circuit diagram of the battery module shown in FIG. 11;

FIG. 13 illustrates a schematic structural diagram of the battery module in some other embodiments;

FIG. 14 illustrates a schematic flow diagram of a method for manufacturing a cell in accordance with some embodiments of the present application;

FIG. 15 illustrates a schematic modular diagram of a device for manufacturing the cell in accordance with some embodiments of the present application.

In the accompanying figures, the accompanying figures are not drawn according to the actual scale.

Reference numerals are listed below:

1-housing; 11-opening; 12-partition plate; 13-accommodating cavity; 2-end cover assembly; 21-end cover body; 22-electrode terminal; 221-first electrode terminal; 222-second electrode terminal; 23-pressure relief component; 3-electrode assembly; 31-main part; 32-battery tab; 321-first battery tab; 322-second battery tab; 33-first electrode piece; 34-second electrode piece; 35-diaphragm; 36-flat surface; 37-arc surface; 3'- electrode string; 4-first adapter; 5-second adapter;

100-cell; 101-first cell; 102-second cell;

200-battery; 200'-battery module; 201-housing assembly; 201A-box body; 201B-cover body; 202-first connecting piece; 203-second connecting piece;

300-vehicle; 301-axle; 302-vehicle wheel; 303-motor; 304-controller;

400-device for manufacturing cell; 410-electrode providing device; 420-electrode placement device; 430-end cover mounting device; 440-terminal connecting device.

Z-first direction; X-second direction; Y-third direction.

## DETAILED DESCRIPTION OF EMBODIMENTS

The embodiments of the present application are further described in detail with reference to the accompanying drawings and the embodiments. The detailed description and the accompanying drawings of the following embodiments are used to exemplarily illustrate the principles of the present application, but cannot be used to limit the scope of the present application. That is, the present application is not limited to the described embodiments.

In the descriptions of the present application, it needs to be noted that, a term "a plurality of' has the meaning of at least two, unless otherwise there is additional explicit and specific limitation for the term of "a plurality of". Orientation or position relationships indicated by terms including "upper", "lower", "left" and "right", "inside", "outside" are only used for the convenience of description of the present application and for the simplification of the description, rather than indicating or implying that the indicated device or element must have a specific orientation and is constructed and operated in a particular orientation, and thus should not be interpreted as limitation to the present application.

In addition, terms "the first" and "the second" are only used for description purposes, and should not be considered as indicating or implying any relative importance. "Vertical" is not strictly vertical, but should be within an allowable range of error. "Parallel" is not strictly parallel, but should be within the allowable range of error. Directional phrases recited in the following descriptions refer to the directions shown in the figures and do not limit the specific structure of the present application.

In the present application, unless there is additional explicit stipulation and limitation, terms including "mount", "connect with each other", "connect" should be broadly interpreted. For example, "connect" may be interpreted as being fixedly connected, detachably connected, or connected integrally. The term "connect" may be further interpreted as being directly connected or indirectly connected through intermediary. A person of ordinary skill in the art may interpret the specific meanings of the aforementioned terms in the present application according to specific conditions.

The phase "embodiments" mentioned in the present application indicates that specific features, structures, or characteristics described with reference to the embodiments can be included in at least some embodiments of the present application. This phrase recited in various parts of the specification does not necessarily refer to the same embodiment, nor does it refer to an independent or alternative embodiment being mutually exclusive with other embodiments. The person of ordinary skill in the art explicitly and implicitly understands that the embodiments described in the present application can be combined with other embodiments.

In the description of the embodiments of the present application, the term "multiple" refers to two or more (including two). Similarly, "multiple groups" refers to two or more groups (including two groups), and "multiple pieces" refers to two or more pieces (including two pieces).

In the present application, expressions for indicating orientation or position relationships, including "upper", "lower", "top" and "bottom", "front", "rear", "inside", "outside", are only used for the convenience of description of the present application, rather than indicating or implying that the indicated device or element must have a specific orientation and is constructed and operated in a particular orientation, and thus should not be interpreted as limitation to the present application.

The battery mentioned in the embodiment of the present application refers to a single physical module that includes multiple cells for providing higher voltage and capacity. For example, the battery mentioned in the present application may include a battery module or a battery pack, etc.

The cell can include lithium-ion secondary batteries, lithium-ion primary batteries, lithium-sulfur batteries, sodium lithium-ion batteries, sodium ion batteries, or magnesium ion batteries, etc. The cell is not limited to the embodiments of the present application. The cell may be in a cylindrical shape, a flat shape, a rectangular shape, or other shape, and the shape of the cell is not limited to the embodiments of the present application. Cells are generally divided into three types by packaging, which include cylindrical cell, square cell, and flexible package cell. The types of the cells are not limited to the embodiments of the present application.

The existing cell generally includes a housing and an electrode assembly accommodated in the housing, and the housing is filled with electrolytes. The electrode assembly is mainly formed by laminating or winding a first electrode piece and a second electrode piece having opposite polarities, and a diaphragm is usually arranged between the first electrode piece and the second electrode piece. The part of the first electrode piece and the second electrode piece coated with active substance is constituted as a main part of the electrode assembly, and the parts of the first electrode piece and the second electrode piece that are not coated with the active substance are constituted as a first battery tab and a second battery tab. In the lithium ion battery, the first electrode piece may be a positive electrode piece, and includes a positive electrode current collector and a positive electrode active material layer arranged on two sides of the positive electrode current collector. The material of the positive electrode current collector may be aluminum, and the positive electrode active material may be, for example, lithium cobalt oxide, lithium iron phosphate, ternary lithium or lithium manganate, etc. The second electrode piece may be a negative electrode piece, and includes a negative electrode current collector and a negative electrode active material layer arranged on two sides of the negative electrode current collector. The material of the negative electrode current collector may be such as a copper. The negative electrode active material may be, for example, graphite or silicon. The first battery tab and the second battery tab may be located at one end of the main part or located at the two ends of the main part respectively. In charging and discharging process of the cell, the positive electrode active material and the negative electrode active material react with the electrolyte, and the battery tabs are connected to the electrode terminals to generate a current loop.

When the battery having a large capacity needs to be achieved, there is a need to arrange more cells, if the number of cells of the battery is greater, the weight ratio and the volume ratio of structural members that does not contribute to the capacity are increased, and the energy density of the battery is reduced. In order to solve this problem, under the condition that the capacity of the battery is fixed, the number of cells needs to be reduced, the capacity of each cell needs to be increased.

In order to design a cell having large-capacity, one idea contemplated by the inventors is to increase the thickness of the cell, for example, to increase the thickness of one single electrode assembly, or increase the number of laminated electrode assemblies. However, for a quick-charge battery, the increase in the thickness is not conducive to heat dissipation of the battery, and the service life, the reliability and the safety of the battery are affected. Another idea is to increase a width size of the cell. However, this idea may lead to increasing of lengths of the electrode pieces and the diaphragms, and increasing of the risk of wrinkling and dislocation of the electrode pieces and the diaphragms, thereby reducing the quality and the manufacturing efficiency of the cell.

On this basis, in order to solve the problem that heat dissipation is affected due to increasing in the size in the thickness direction of the electrode assembly, and the quality of the battery is affected due to the increasing in the lengths of the electrode pieces, the inventor attempts to arrange a plurality of electrode assemblies in parallel in a width direction of the cell, and electrically connect the positive electrode battery tabs of the plurality of electrode assemblies to the positive electrode terminals, and electrically connect the negative electrode battery tabs of the plurality of electrode assemblies to the negative electrode terminals.

However, this technical solution has the following problems when being implemented: one, a long stroke of a connecting piece is needed when connecting the battery tabs having the same polarity, there exists a short-circuit risk, welding positions are added, and an internal resistance of the cell is increased. Two, in order to facilitate the welding of the connecting piece and the battery tab, the battery tab needs to be led out in a direction towards the end cover assembly, the space occupation in a height direction of the cell is large, and the energy density of the cell is reduced. Three, the current is collected to the battery tabs connected with the electrode terminals through the connecting piece in the charging and discharging process of the battery, which is not conducive to the transmission and distribution of joule heat, and a risk of battery temperature rise is increased.

Based on the discovery of the above-mentioned technical problem, when designing a cell having a large-capacity, both the internal structure and the electrical connection mode of the cell need to be improved to comprehensively improve the performance of the battery.

The battery in the present application can be used for electrical devices, and can supply electrical energy for the electrical devices. The electrical devices may be mobile phones, portable devices, laptops, electric cars, electric cars, ships, spacecraft, electric toys, and electric tools, etc. For example, the spacecraft includes airplanes, rockets, space shuttles, and spacecraft, etc., and electric toys include fixed or mobile electric toys, such as game consoles, electric car toys, electric ship toys, and electric aircraft toys, etc. Electric tools include metal cutting electric tools, grinding electric tools, assembly electric tools and railway electric tools, such as electric drills, electric grinders, electric wrenches, electric screwdrivers, electric hammers, impact electric drills, concrete vibrators and electric planers.

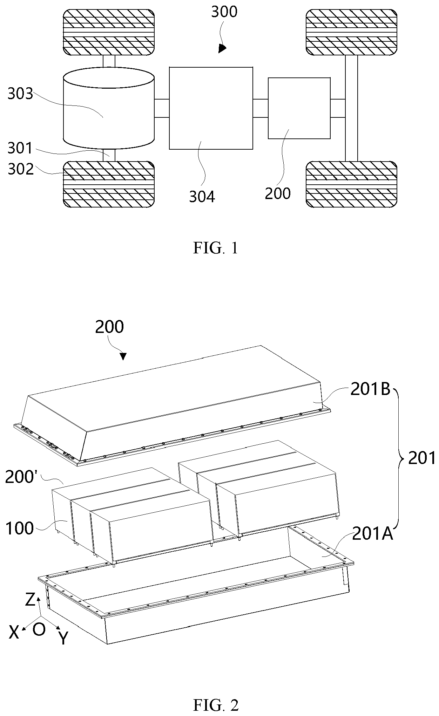

As shown in FIG. 1, the electric device may be a vehicle 300, such as a new energy vehicle. The new energy vehicle may be a pure electric vehicle, a hybrid electric vehicle or an extended-range vehicle, or the like. As an alternative, the electric device may also be an unmanned aerial vehicle or a ship. In particular, the vehicle 300 may include an axle 301, wheels 302 connected to the axle 301, a motor 303, a controller 304, and a battery 200. The motor 303 is configured to drive the axle 301 to be rotated. The controller 304 is configured to control the motor 303 to be operated. The battery 200 may be arranged at the bottom, the head, or the tail of vehicle 300 to supply electrical energy for the operations of the motor 303 and other components in the vehicle 300.

FIG. 2 illustrates a schematic structural diagram of the battery 200 in accordance with some embodiments of the present application. The battery 200 includes a housing assembly 201and a cell 100. In the battery 200, the cell 100 may be one or plural. If the number of the cells 100 are plural, the plurality of cells 100 may be connected in series or in parallel or in hybrid junction, and the hybrid connection means that the plurality of cells 100 are connected in series and connected in parallel, which can be implemented as connecting multiple cells 100 in series or in parallel or in hybrid junction to form multiple battery modules, and then connecting the multiple modules in series or in parallel or in hybrid junction to form integrated structure, and accommodating the integrated structure in the housing assembly 201. As an alternative, all cells 100 can be directly connected in series or in parallel or in hybrid junction. Then, the integrated structure constituted by all cells 100 is accommodated in the housing assembly 201.

The interior of the housing assembly 201 has a hollow structure, and at least one battery module 200' is accommodated in the housing assembly 201. For example, the housing assembly 201 may include a box body 201a and a cover body 201b, and the box body 201a and the cover body 201b are fastened together. For example, the box body 201a and the cover body 201b may be shaped as a hollow cuboid, and each of the box body 201a and the cover body 201b has one surface with opening, the openings of the box body 201a and the opening of the cover body 201b are oppositely arranged, and the box body 201a and the cover body 201b are fastened to each other to form a box body having a closed chamber. Alternatively, the box body 201a is shaped as a cuboid with an opening, the cover body 201b is plate-shaped, or the cover body 201b is shaped as a cuboid with an opening, and the box body 201a is plate-shaped, and the box body 201a and the cover body 201b are oppositely arranged and fastened to form the box body having the closed chamber. After the at least one battery module 200' is connected in parallel or in series or in hybrid junction, the at least one battery module 200' is placed in the closed chamber formed after the box 201a and the cover body 201b are fastened.

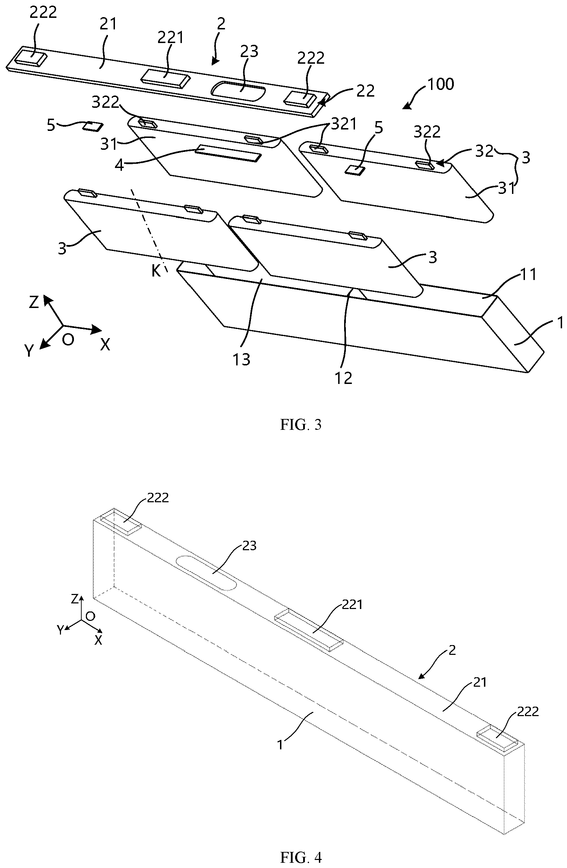

In some embodiments, as shown in FIG. 3, a cell 100 is provided in the present application, the cell includes a housing 1, an end cover assembly 2, and at least two groups of electrode assemblies 3. The housing 1 has an opening 11 arranged in a first direction Z. The end cover assembly 2 is configured to cover the opening 11, the end cover assembly 2 includes an end cover body 21 and at least two electrode assemblies 3 arranged on the end cover body 21 and having opposite polarities. At least two groups of electrode assemblies 3 are arranged in parallel in the housing 1 in the second direction X, and the second direction X is perpendicular to the first direction Z. Each group of electrode assemblies 3 in the at least two groups of electrode assemblies 3 includes at least one electrode assembly 3, and the electrode assembly 3 includes the main body 31 and two battery tabs 32 having opposite polarities and led out from the main body 31.

In the second direction X, the two adjacent battery tabs 32 in every two adjacent groups of electrode assemblies 3 have the same polarity, and are connected in common to one electrode terminal 22 having the same polarity. The two battery tabs 32 away from each other in every two adjacent groups of electrode assemblies 3 have the same polarity and are respectively connected to one electrode terminal 22 having the same polarity.

The housing 1 has a hollow structure and is configured to accommodate the electrode assemblies 3, and the housing 1 has an opening 11, and the end cover body 21 is configured to cover the opening 11. For example, for the cuboid cell 100, the end cover body 21 is shaped as a rectangular plate-shaped structure. The two kinds of electrode terminals 22 are a positive terminal and a negative terminal respectively, and the number of each of the two kinds of electrode terminals 22 may be one or plural. The electrode terminals 22 may have a structure such as a rectangular cylinder structure or a cylinder structure. The electrode terminals 22 and the end cover body 21 can be integrally formed through injection molding, an assembly difficulty can be reduced. Alternatively, other assembling methods may be used.

The at least two electrode assemblies 3 are arranged in parallel in the housing 1 in the second direction X, the second direction X is perpendicular to the first direction Z and the thickness direction of the electrode assemblies 3, and adjacent groups of electrode assemblies 3 are insulated from each other. One single electrode assembly may be arranged or multiple electrode assemblies may be arranged to be laminated in each group of electrode assemblies. For example, two electrode assemblies 3 are arranged to be laminated in FIG. 3. The third direction Y is perpendicular to the first direction Z and the second direction X, and is consistent with the thickness direction of the electrode assembly 3. When the plurality of electrode assemblies 3 are laminated in the third direction Y, all battery tabs 32 which have the same polarity and are adjacent to each other in the two adjacent groups of electrode assemblies 3 may be connected in common to one electrode terminal 22. As an alternative, some pairs of battery tabs 32 which have the same polarity and are adjacent to each other in the two adjacent groups of electrode assemblies 3 may be connected in common to one electrode terminal 22.

For example, a winding structure or a laminated structure may be used for the electrode assembly 3. The electrode assembly 3 has a positive electrode piece and a negative electrode piece. The positive electrode piece includes a positive current collector and a positive electrode active material layer arranged on two sides of the positive electrode current collector. The negative electrode piece includes a negative electrode current collector and a negative electrode active material layers arranged on two sides of the negative electrode current collector. The parts of the positive electrode piece and the negative electrode piece coated with active substances are constituted as the main body 31 of the electrode assembly 3, while the parts of the positive electrode piece and the negative electrode piece which are not coated with active substances are constituted as positive electrode battery tabs and negative electrode battery tabs.

The cell 100 in this embodiment is provided with at least two groups of electrode assemblies 3 in parallel in the second direction X in the housing 1 without increasing the sizes of the electrode assemblies 3 in the thickness direction, increasing of the heat dissipation path inside the electrode assembly 3 can be avoided. The heat dissipation effect can be improved on the basis of increasing of the capacity of the cell 100. Moreover, there is no need to manufacture the electrode assembly 3 having a large volume, the manufacturing difficulty can be reduced, and a defective product generation rate is reduced, the quality and the manufacturing efficiency of the cell 100 are improved accordingly.

Moreover, this cell 100 enables the two battery tabs 32 adjacent to each other in every two adjacent electrode assemblies 3 have the same polarity, and are connected in common to one electrode terminal 22 having the same polarity, which at least has the following advantages.

Firstly, the battery tabs 32 having the same polarity in every two adjacent electrode assemblies 3 can be conveniently connected together, the lengths of the connecting pieces for connecting the battery tabs 32 having the same polarity are shortened, the electrical connection structure of the cell 100 is simplified, and the internal resistance of the cell 100 can also be reduced.

Secondly, the battery tabs 32 having different polarities are respectively located in relatively independent areas in the second direction X, the risk of short circuit is reduced, and the security of operation of the cell 100 is improved.

Thirdly, the battery tabs 32 having the same polarity in every two adjacent electrode assemblies 3 can be conveniently connected without considering an avoidance problem of the battery tabs 32 having different polarities during connection of the battery tabs 32 having different polarities, the battery tabs 32 are allowed to be bent, and the space occupation of the battery tabs 32 in the first direction Z is reduced, and the energy density of the cell 100 is increased.

Fourthly, since the distance between the battery tabs 32 having the same polarity in every two adjacent groups of electrode assemblies 3 is relatively close, when these battery tabs 32 are connected in common to the electrode terminals 22 having the same polarity, the distance that the electrons are travelled to the electrode terminals 22 through the different battery tabs 32 is relatively shorter, a calorific value is reduced, the conduction and distribution of heat are facilitated, the risk of temperature rise of the cell 100 is reduced, and the safety of operation of the battery is improved.

In some embodiments, the sum of the number of all electrode terminals 22 in the two kinds of electrode terminals 22 is N1, and the number of the group of the at least two groups of electrode assemblies 3 is N2. N1 is an odd number greater than or equal to 3, and N2 is an even number greater than or equal to 2. When N2 is an even number, two electrode terminals 22 located at the outermost side in the second direction X have the same polarity. Alternatively, N2 may also be an odd number, and the two electrode terminals 22 located at the outermost side in the second direction X have opposite polarities.

In some embodiments, the sum of the number of all electrode terminals 22 in the two kinds of electrode terminals 22 is N1, the number of the group of the at least two groups of electrode assemblies 3 is N2, and N1 and N2 satisfy the relational expression listed below: N1-N2=1, N1 and N2 may be odd number or even number.

When N1 is an odd number, N2 is an even number; N1 is an even number, N2 is an odd number. For example, the cell 100 in FIG. 3 is provided with two electrode assemblies 3, and the number of the electrode terminals 22 is three. As an alternative, three electrode assemblies 3 are provided, and four electrode terminals 22 are provided. As an alternative, four electrode assemblies 3 are provided, and five electrode terminals 22 are provided.

In this embodiment, the battery tabs 32 having the same polarity in every two adjacent electrode assemblies 3 can be connected to the same electrode terminal 22, and only the battery tabs 32 located at the outermost side are independently connected to one electrode terminal 22. Thus, the battery tabs 32 having the same polarity in every two adjacent electrode assemblies 3 can be conveniently connected together, the electrical connection structure in the cell 100 is simplified, and the number of the electrode terminals 22 is reduced as much as possible.

In some embodiments, all electrode terminals 22 in the two kinds of electrode terminals 22 are spaced apart in the second direction X, and each electrode terminal 22 and the battery tab 32 connected to the electrode terminal 22 are oppositely arranged in the first direction Z.

Regarding the electrode terminal 22 connected to the battery tab 32 in one single group of electrode assemblies 3, "oppositely arranged" means that the projection of the electrode terminal 22 in a X plane perpendicular to the first direction and the projection of the battery tabs 32 in the X plane perpendicular to the first direction have an overlapping region. Regarding the electrode terminals 22 connected to the battery tabs 32 in two adjacent groups of electrode assemblies 3, the "oppositely arranged" means that the projection of the electrode terminal 22 in the X plane perpendicular to the first direction and the projection of the battery tabs 32 of the at least one group of electrode assemblies 3 in the X plane perpendicular to the first direction have an overlapping region, or the projection of the electrode terminals 22 in the X plane perpendicular to the first direction is located between the battery tabs 32 of the two adjacent groups of electrode assemblies 3.

In this embodiment, an electrode terminal 22 can be enabled to be close to a battery tab 32 connected to the electrode terminal 22 and the electrical connection between the electrode terminal 22 and the battery tab 32 is facilitated. A direct connection is prone to be implemented when a lead out length of the battery tab 32 is appropriate. Alternatively, even if an adapter is used to connect the electrode terminal with the battery tab, the size of the adapter can be reduced, and the effective connection area between the electrode terminal 22 and the battery tab 32 can also be increased, an overcurrent capacity of the cell 100 is improved.

In some embodiments, both battery tabs 32 are all led out toward the end cap assembly 2.

After the battery tab 32 is led out, the battery tab 32 can be maintained in the state of extending in the first direction Z. The battery tab 32 can also be bent so as to be better electrically connected to the electrode terminal 22 in a welding or riveting manner.

In this embodiment, considering that multiple groups of electrode assemblies 3 are arranged in parallel in the second direction in the cell 100, a larger size of the cell 100 in the second direction is caused. By guiding the two kinds of battery tabs 32 in the direction towards the end cover component 2, additional space occupied by the battery tabs 32 in the second direction may be avoided, and the spacing between two adjacent groups of electrode assemblies 3 can be reduced and the size of the cell 100 in the second direction is minimized accordingly. The size ratio in all directions are balanced on the basis that the performance requirement of the cell 100 having large capacity are met. Moreover, this method for leading out the battery tabs 32 can simplify the structure of the adapter and reduce an assembly difficulty. In addition, the arrangement of leading out the two kinds of battery tabs 32 from the same side of the main body can reduce the space occupied by the battery tab 32 in the first direction Z and increase the energy density of the cell 100.

Optionally, a winding axis K of the electrode assembly 3 is arranged in the second direction X, and the two battery tabs 32 are respectively led out from the two sides of the main part 31 in the second direction X, and are connected to the electrode terminal 22 through a bent adapter.

In some embodiments, as shown in FIG. 3, the cell 100 further includes: a first adapter 4 and a second adapter 5. Two battery tabs 32 adjacent to each other in every two adjacent groups of electrode assemblies 3 are connected to one electrode terminal 22 having the same polarity through the first adapter 4, and two battery tabs 32 being away from each other in every two adjacent groups of electrode assemblies 3 are respectively connected to one electrode terminal 22 having the same polarity through the second adapter 5.

The first adapter 4 and the second adapter 5 may be an adapter piece, and the adapter piece and the end cover body 21 are arranged in parallel, and the battery tab 32 is bent so as to be electrically connected to the electrode terminal 22 through the adapter piece. Alternatively, the adapter piece may also be a bent sheet structure so as to electrically connect the battery tab 32 with the electrode terminal 22.

In this embodiment, the battery tab 32 is connected to the electrode terminal 22 through the adapter, the battery tab 32 can not only match the height of the electrode terminal 22 extending into the housing 1 in the first direction, the two kinds of battery tabs 32 can also be connected through the adapter and the electrode terminal 22 can be enabled to connect to the adapter to increase the effective electrical connection region, when the electrode terminal 22 is connected to the two adjacent battery tabs 32 in the two adjacent groups of electrode assemblies 3. A connection between two kinds of battery tabs 32 is facilitated when the distance between the two kinds of battery tabs 32 is relatively longer. If welding is applied, the frequency of transition joint welding is reduced, the resistance in the current circuit is reduced accordingly, and the electrode assembly 3 can also be avoided from being burned by welding energy, the quality of assembling is improved.

In some embodiments, each group of electrode assemblies 3 includes a plurality of electrode assemblies 3, and the plurality of electrode assemblies 3 are laminated in a third direction Y, the third direction Y is perpendicular to the second direction X and the first direction Z. As shown in FIG. 3, each group of electrode assemblies 3 includes two electrode assemblies 3.

In this embodiment, each group of electrode assemblies 3 is arranged, such that the multiple electrode assemblies 3 are laminated in the third direction Y. The capacity of the cell 100 can be increased and the heat dissipation requirement can be satisfied, under the condition that the thickness of one single electrode assembly 3 is constant. Moreover, when the thickness of a group of electrode assemblies 3 is constant, the length of the electrode pieces in the winding electrode assembly 3 can be reduced, or the number of laminated layers of the electrode pieces in the laminated electrode assemblies 3 can be reduced.

In some embodiments, as shown in FIG. 3, FIG. 4, and FIG. 5, the cell 100 includes two electrode assemblies 3, the two kinds of electrode terminals 22 include a first electrode terminal 221 and two second electrode terminals 222 arranged to be spaced apart in a second direction X. The first electrode terminal 221 is arranged between the two second electrode terminals 222, and the two kinds of battery tabs 32 of the electrode assembly 3 include first battery tabs 321 and second battery tabs 322.

The first battery tabs 321 of the two groups of electrode assemblies 3 are arranged to be close to each other and are connected to the first electrode terminal 221, and the second battery tabs 322 of the two groups of electrode assemblies 3 are located on two sides of the first battery tab 321 in the second direction X and are respectively connected to the second electrode terminal 222 on the same side.

For example, the first battery tab 321 and the second battery tab 322 of each group of electrode assemblies 3 may be led out from the positions adjacent to two ends of the main part 31 in the second direction X. Correspondingly, the two second electrode terminals 222 located at the outermost side are arranged in the second direction X on the positions adjacent to the two ends of the end cover body 21. The first electrode terminal 221 may be arranged in the second direction X on a middle area of the end cover body 21, so that the distances that electrons are transmitted to the first electrode terminal 221 from the first battery tabs 321 of the two adjacent groups of electrode assemblies 3 are nearly the same, the reduction of heat generation.

Since the first electrode terminal 221 is connected to the first battery tabs 321 in the two adjacent electrode assemblies 3 simultaneously, in order to improve the overcurrent capability of the cell 100, a projection area of the first electrode terminal 221 in the cross section perpendicular to the first direction Z may be greater than that of the second electrode terminal 222. For example, the first electrode terminal 221 located in the middle may be a positive terminal, and the second electrode terminals 222 located on the two sides are negative terminals. As an alternative, the first electrode terminal 221 located in the middle may be a negative terminal, and the second electrode terminals 222 located on the two sides are positive terminals.

In this embodiment, two groups of electrode assemblies 3 are arranged in parallel in the second direction in the cell 100, this arrangement can improve the heat dissipation effect and increase the capacity of the cell 100. Moreover, the first electrode terminal 221 and two second electrode terminals 222 located on two sides in the second direction are arranged to be spaced apart from each other in the second direction X, and each electrode terminal 22 is electrically connected to one battery tab 32 in the corresponding region, such that an arrangement of a complex electrical connection structure in the cell 100 can be avoided, the structure is simplified, the cell 100 is prone to be assembled, and the risk of short circuit is reduced, the safety of the operation of the cell 100 can be improved. In addition, on the basis of increasing the capacity of the cell, a size ratio of the cells 100 in the three orthogonal directions can be balanced as much as possible, an overall strength of the cell 100 is ensured, and deformation of the cell 100 can be avoided during use.

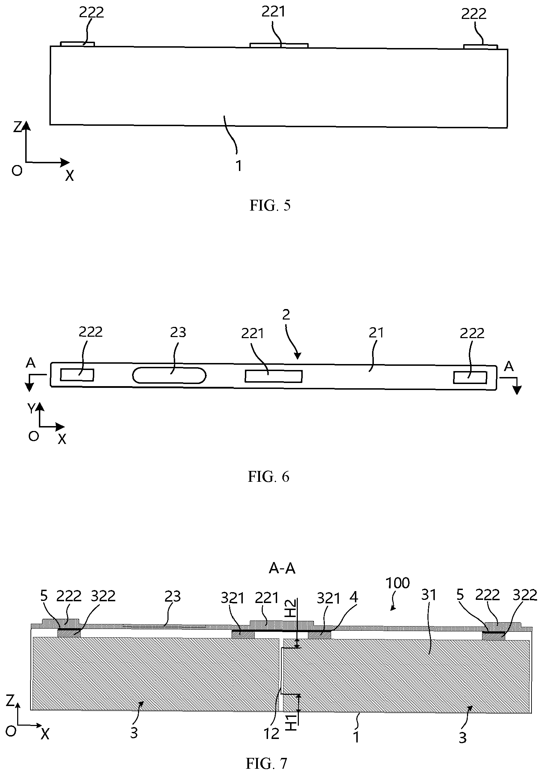

As shown in FIG. 6, the end cover assembly 2 further includes pressure relief component(s) 23 arranged on the end cover body 21. The pressure relief component 23 is arranged at any position between two adjacent electrode terminals 22, and the number of the pressure relief component(s) 23 may be one or plural. Due to the fact that the inner spaces of the housing 1 are intercommunicated, an arrangement of one pressure relief component 23 can also satisfy functional requirements. For example, the pressure relief component 23 is arranged between the first electrode terminal 221 and the second electrode terminals 222.

The pressure relief component 23 refers to an element or a component that is actuated to relieve internal pressure or temperature when the internal pressure or the temperature of the cell 100 reaches a predetermined threshold value. The arrangement of the threshold value is different according to different requirements of design. The threshold value may be determined by one or more of the first electrode piece, the second electrode piece, the electrolyte and the diaphragm in the cell 100. The pressure relief component 23 may be in the form of an explosion-proof valve, an air valve, a pressure relief valve, a safety valve, etc., and can use a pressure-sensitive or temperature-sensitive element or structure. That is, when the internal pressure or the temperature of the cell 100 reaches the predetermined threshold, the pressure relief component 23 performs an action or a weak structure arranged in the pressure relief component 23 is damaged, such that an opening or a channel for relieving the internal pressure or temperature is formed.

In some embodiments, as shown in FIG. 7, the cell 100 further includes at least one partition plate 12 arranged in the housing 1. The at least one partition plate 12 is configured to separate the spaces in the housing 1 into at least two accommodating cavities 13 in the second direction X, and the at least two groups of electrode assemblies 3 are arranged in the at least two accommodating cavities 13 in a one-to-one correspondence manner. The partition plate 12 is insulated from the electrode assembly 3.

In this embodiment, the electrode assembly can be located and limited by arranging the partition plates 12, shaking and interference between the multiple groups of electrode assemblies 3 can be avoided during use, the positions of the electrode assembly 3 are more stable, collisions that may cause the active substance on the electrode to fall off and affect the performance are avoided, or a disengagement of the position of the electrical connection between the battery tab 32 and the electrode terminal 22 due to frequent misalignment is avoided. The insulation performance between two adjacent electrode assemblies can also be ensured, and the reliability of operation of the cell 100 is improved accordingly.

In some embodiments, the at least one partition plate 12 is connected to the housing 1.

For example, the partition plate 12 may be connected to two side walls of the housing 1 perpendicular to the third direction Y, or be connected to the bottom wall of the housing 1 opposite to the end cover assembly 2 in the first direction Z. For example, the partition plate 12 is detachably mounted on the housing 1 through fastener, bonding, or similar manner. As an alternative, the partition plate 12 and the housing 1 are integrally formed. For example, the partition plate 12 and the housing 1 may be made of a metal material, such as aluminum alloy.

The volume of the accommodating cavity 13 may be slightly larger than the volume of one group of electrode assemblies 3, in order that a gap is reserved between the electrode assembly 3, and the housing 1 and the partition plate 12. On the basis of limiting the maximum shaking amount of the electrode assembly 3, a space for expansion of the electrode assembly 3 is formed to release internal stress.

In this embodiment, the partition plate 12 is connected to the housing 1, such that the position between the partition plate 12 and the housing 1 can be relatively fixed, the electrode assembly 3 can be better located and limited. Moreover, due to the fact that at least two groups of electrode assemblies 3 are arranged in parallel in the second direction in the housing 1, the size of the housing 1 in the first direction is increased. The arrangement of the partition plate 12 can support the housing 1, strengthen the overall strength of the housing 1, and prevent the housing 1 from being deformed during storing, transportation, assembling and use of the cell 1, the assembly quality and the reliability of usage of the cell 100 are improved.

Moreover, if the partition plate 12 is not provided, there are areas corresponding to the plurality of groups of electrode assemblies 3 in the housing 1, and expansion forces are applied to the corresponding parts of the housing 1 during the expansion of the electrode assemblies 3. Due to the large area of the side wall of the housing 1 perpendicular to the third direction Y, the side wall is prone to be deformed, which may cause mutual influence on the expansions of the corresponding areas of different groups of electrode assemblies 3.

Moreover, according to the arrangement of the partition plate 12, the rigidity of the part of the housing 1 between the two adjacent groups of electrode assemblies 3 can be strengthened, expansion processes of different groups of electrode assemblies 3 are independent of each other and a mutual influence is avoided. The partition plate 12 ensures that pressure forces are applied to all parts of the electrode assembly 3 uniformly during use, when expansion force is applied to the electrode assembly 3. Thus, uniform distribution of currents in the electrode assembly 3 can be realized, the "capacity diving" is avoided, and the service life of the cell 100 is prolonged accordingly. The "capacity diving" refers to a phenomenon of non-linear decrease in the capacity of the cell 100 after the service life of the cell 100 declines to below 80%.

In some embodiments, adjacent accommodating cavities 13 are interconnected. For example, at least one through hole may be arranged on the partition plate 12, or a preset distance is arranged between the partition plate 12 and the housing 1.

In this embodiment, the adjacent accommodating cavities 13 are arranged to be interconnected, which allows electrolytes between different accommodating cavities 13 to flow through each other, the volumes of the electrolytes in different accommodating cavities 13 are balanced, the concentrations of the electrolytes in different accommodating cavities 13 are homogeneous. Thus, the charging and discharging processes of the electrode assemblies 3 in different accommodating cavities 13 can be more balanced during the operation of the cell 100. Moreover, during the operation of the cell 100, according to the flow of the electrolyte, heat distribution in different accommodating cavities 13 can also be balanced, and too high local temperature rise can be avoided.

In some embodiments, a thickness of the partition plate 12 is greater than a thickness of the housing 1. For example, the thickness of the partition plate 12 exceeds a thickness range of the housing 1 by 0.3 mm.

In this embodiment, by increasing the thickness of the partition plate 12, the rigidity of the central position of the housing 1 be strengthened, the partition plate 12 ensures that pressure forces are applied to all parts of the electrode assembly 3 uniformly during use, when expansion force is applied to the electrode assembly 3, the "capacity diving" is avoided, and the service life of the cell 100 is prolonged accordingly.

In some embodiments, as shown in FIG. 7, a first preset distance H 1 is formed between a first end of the partition plate 12 away from the end cover assembly 2 and a bottom wall of the housing 1, and the bottom wall of the housing 1 and the end cover assembly 2 are oppositely arranged in the first direction Z. For example, the range of H1 may be arranged to be in a range of 3 mm and 5 mm. The partition plate 12 may be connected to two side walls of the housing 1 in a direction perpendicular to the third direction Y and are opposite to each other.

In this embodiment, by arranging the first preset distance H1 between the partition plate 12 and the bottom wall of the housing 1, this arrangement allows the accommodating cavities 13 at two sides of the partition plate to be intercommunicated, and allows the electrolytes in the accommodating cavities 13 at the two sides of the partition plate to flow freely, flow resistance is reduced, and the volume and the concentration of electrolytes can be better balanced.

In some embodiments, as shown in FIG. 7, the two kinds of battery tabs 32 are led out towards the end cover assembly 2, the second end of the partition plate 12 adjacent to the end cover assembly 2 is lower than the end face of the main part 31 by the second preset distance H2. The end face of the main part 31 is configured to lead out the two kinds of battery tabs 32.

According to this embodiment, the partition plate 12 is arranged to be lower than the main body part 31, so that the battery tabs 32 can be prevented from being in contact with the partition plate 12 to generate a short circuit when they are bent, and the partition plate 12 is also prevented from being in contact with the first adapter 4 to generate a short circuit, such that the safety of operation of the cell 100 can be improved.

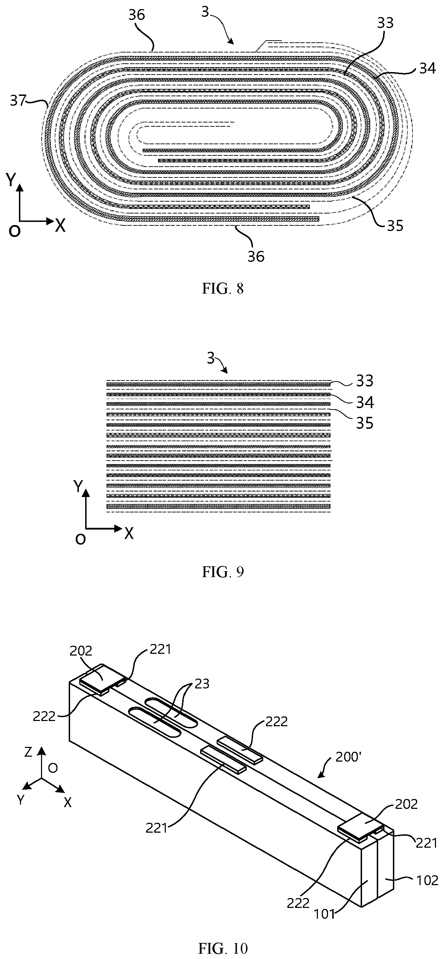

In some embodiments, as shown in FIG. 8, the electrode assembly 3 has a winding structure, and a winding axis K of the electrode assembly 3 is arranged along the first direction Z.

The electrode assembly 3 is formed by winding a first electrode piece 33 and a second electrode piece 34 having opposite polarities, and a diaphragm 35. The first electrode piece 33 and the second electrode piece 34 are alternately arranged, and the diaphragm 35 separates the first electrode piece 33 from the second electrode piece 34. The shapes of the first electrode piece 33 and the second electrode piece 34 are basically the same, and the first electrode piece 33 and the second electrode piece 34 may be elongated strip-shaped structures. The wound body portion 31 may be a cylinder structure, a flat structure, a cuboid structure, or other shape. For example, the first electrode piece 33 may be a positive electrode piece, and the second electrode piece 34 is a negative electrode piece. As an alternative, the first electrode piece 33 is a negative electrode piece, and the second electrode piece 34 is a positive electrode piece.

In this embodiment, the winding axis K of the electrode assembly is arranged in the first direction Z, such that electrolytes can be evenly infiltrated into the ends of the electrode assembly 3 to realize uniformity of conductivity of all positions of the first electrode piece 33 and the second electrode piece 34, and the performance of the cell 100 is improved.

In some embodiments, the electrode assembly 3 has a flat surface 36 and an arc surface 37. The flat surface 36 of the electrode assembly 3 is perpendicular to the third direction Y, that is, the thickness direction of the electrode assembly 3 is consistent with the third direction Y, the third direction Y is perpendicular to the second direction X and the first direction Z, and arc surfaces 37 of every two adjacent groups of electrode assemblies 3 are oppositely arranged in the second direction X.

In particular, the electrode assembly 3 is flat after being wound, an outer surface of the electrode assembly 3 is provided with two flat surfaces 36 and two arc surfaces 37, the two flat surfaces 36 are oppositely arranged in parallel in the third direction Y, and the flat surfaces 36 are approximately parallel to the winding axis K and are the outer surfaces with the largest area. The flat surfaces 36 may be relatively flat surfaces and a holomorphic plane is not required for the flat surface 36. One arc surface 37 is connected to the respective first ends of the two flat surfaces 36, and the other arc surface 37 is connected to the respective second ends of the two flat surfaces 36. During manufacturing of the electrode assembly 3, the electrode assembly 3 may be directly wound into a flat shape. Alternatively, the electrode assembly 3 may be wound into a hollow cylindrical structure first, and then is flattened into a flat shape after being wound.

In this embodiment, a winding electrode assembly 3 is adopted, mechanized production is prone to be realized, and the uniformity is better ensured, mass production is facilitated. Moreover, as compared to the arrangement of laminating the multiple groups of electrode assemblies 3 in the thickness direction, the multiple groups of electrode assemblies 3 is arranged in parallel in the direction perpendicular to the thickness direction of the electrode assembly 3, the heat dissipation effect can be improved while the cell 100 having large capacity is achieved, the service life, the reliability and the safety of the battery are improved during fast charging or long-term use of the battery. A problem of reduction of the manufacturing efficiency and the successful rate of the electrode assembly 3 due to long stroke of electrode piece can also be solved.

In some embodiments, as shown in FIG. 9, the electrode assembly 3 has a laminated structure. The electrode assembly 3 has a first electrode piece 33 and a second electrode piece 34 which have opposite polarities and are laminated in the third direction Y, and the third direction Y is perpendicular to the second direction X and the first direction Z.

In particular, the electrode assemblies 3 are laminated in the third direction Y through the first electrode piece 33, the second electrode piece 34 and the diaphragm 35. The first electrode piece 33 and the second electrode piece 34 are alternately arranged, and the diaphragm 35 separates the first electrode piece 33 from the second electrode piece 34.

In this embodiment, laminated electrode assemblies 3 are used, the arrangement of the sizes of the electrode assemblies 3 is flexible. The first electrode piece 33 and the second electrode piece 34 may be cut into rectangular structures, which can better occupy the space in the housing 1 and improve the energy density of the cell 100. Moreover, as compared to laminating the multiple groups of electrode assemblies 3 in the thickness direction, the multiple groups of electrode assemblies 3 are arranged in parallel in the direction perpendicular to the thickness direction of the electrode assemblies 3, the heat dissipation effect can be improved while the cell 100 having large capacity is realized, the service life, the reliability, and the safety of the battery can be improved during fast charging or long-term use of the battery.

In some embodiments, a ratio of a first dimension L1 of the cell 100 in the second direction X to a second dimension L2 of the cell 100 in the third direction Y ranges from 8 to 130. The third direction Y is perpendicular to the second direction X and the first direction Z.

In order to increase the capacity of the cell 100 in this embodiment, the plurality of electrode assemblies 3 are arranged in parallel in the second direction X by increasing the size of the cell 100 in the second direction X (the width direction), the size of the cell 100 in the third direction Y (the thickness direction) is reduced. This slender cell 100 can not only meet the requirement of large capacity, but also optimize the heat dissipation effect, and has good operation performance.

In some embodiments, the electrode assembly 3 includes the first electrode piece 33 and the second electrode piece 34 arranged in a laminated manner. The part of the second electrode piece 34 for forming the main part 31 is coated with negative electrode active material, and the coating weight CW of the negative electrode active material and the thickness THK of the housing 1 meet the following relational expression:

$$2.53 < 30/\text{THK} + 0.135\text{CW} < 4.53 \ (1)$$

Regarding the fast-charging cell 100, there are generally two indexes for limiting the improvement of the fast charging capability, one index is a lithium intercalation capacity of the negative electrode piece, and the other index is the temperature rise caused due to the polarization in the fast charging process. In order to improve the lithium intercalation capacity of the negative electrode piece, increase the charging speed, and shorten the charging time, the most direct method is using light and thin negative electrode coating design. With the reduction of the coating weight CW of the negative active material, the fast charging capability of the lithium ion cell 100 is improved, and the time required for charging is greatly reduced accordingly.

Moreover, with the improvement of the fast charging capability, the charging time required by the cell 100 is shortened, and the problem of battery heat dissipation becomes severe. Under the conventional battery structure design, due to the increase of the size of the cell 100 in the second direction X (width direction), in order to manufacture the cell 100 having large capacity, the size of the cell 100 in the third direction Y (thickness direction) needs to be increased. After the fast charging time is shortened, the thickness is increased, and thus the internal heat dissipation path of the electrode assembly 3 is too long, the heat dissipation rate is low, and a risk of over-temperature exists. In fact, the coating weight CW of the negative electrode piece is closely related to the fast charging time based on a large amount of experimental verification and simulation calculation. The thickness of the housing 1 is also closely related to the fast charging time in order to prevent the cell 100 from exceeding a certain temperature upper limit at different fast charging speeds.

The lighter the coating weight CW of the negative electrode active material, the shorter the charging time required for the cell 100, and the smaller the thickness of the lithium ion cell 100 should be. Based on a large number of experimental verification and simulations, when formula (1) is satisfied, the cell 100 can realize the effects of improving the fast charging capability and avoiding the temperature rise from exceeding the preset threshold value.

As shown in table 1 below, the negative electrode piece has different equivalent fast charging capabilities under the coating weight CW design of different negative electrode active substances, and the equivalent fast charging capability XC refers to the charging rate that can be borne by the lithium ion battery when the lithium ion battery is charged to 80% of the capacity, and X is the charging rate. For example, under the design of the CW equaling 7.5 mg/cm$^2$, the cell 100 may be charged to 80% of the capacity from empty at a charging rate of 4C. The fast charging temperature rise refers to the temperature rise of the central position of the cell 100 when the lithium ion cell 100 is in a natural heat dissipation state at an ambient temperature of 25°C. The temperature of the central position is the highest, and the temperature of the cell 100 can be accurately reflected.

In usage scenario of the lithium ion battery, in order to ensure the service life and the safety of the battery, the maximum usage temperature of the battery cannot exceed 55°C. When the fact charging for the battery is performed at 25°C, it indicates that the maximum temperature rise upper limit of the battery is 30°C. Under this limitation condition, the inventors obtained the maximum design value of the thickness THK of the housing 1 under different designs of coating weight CW of the active substances through experimental testing and simulation analysis, which is shown in table 1 below. In order to improve preparation efficiency and ensure the capacity of the cell 100, the thickness of the housing 1 cannot be designed too thin, and is usually greater than 10 mm. Thus, lithium-ion batteries that meet the formula (1) can achieve the technical effect of improving the fast charging capacity and preventing the temperature rise from exceeding the preset threshold value, and ensuring the design of high capacity.

Table 1 cell design parameters and charge performance correspondence table

| CW/mg/cm$^2$ | THK/MM | Equivalent fast charge capability/C | 30/THK+0.135CW | Fast charge temperature rise/°C |
|---|---|---|---|---|
| 7.5 | 20 | 4 | 2.53 | 30 |
| 10 | 25 | 2.8 | 2.53 | 30 |
| 11.5 | 30 | 2 | 2.53 | 30 |
| 13 | 40 | 1.2 | 2.53 | 30 |

It can be seen from the table 1 that the lighter the coating weight CW of the negative active material, the thinner the thickness THK of the housing 1. When the charging temperature rise does not exceed the preset threshold value, the greater the equivalent fast charging capability that can be achieved by the cell 100, the shorter the required charging time.

FIGS. 3-7 are taken as examples below, some specific embodiments of the cell 100 of the present application are provided.

As shown in FIGS. 3-7, the cell 100 includes a housing 1, an end cover assembly 2 and two groups of electrode assemblies 3. The housing 1 has an opening 11 arranged towards the first direction Z, and a partition plate 12 is arranged inside the housing 1. The partition plate 12 separates the space inside the housing 1 into two accommodating cavities 13 in the second direction X. The end cover assembly 2 is configured to cover the opening 11. The end cover assembly 2 includes an end cover body 21, and a first electrode terminal 221 and two second electrode terminals 222 which are arranged on the end cover body 21 and have opposite polarities. The first electrode terminal 221 is located at a central position of the end cover body 21 in the second direction X, the two second electrode terminals 222 are respectively located at the positions adjacent to two ends of the end cover body 21. A pressure relief component 23 is further arranged on the end cover body 21, and the pressure relief component 23 is located between the first electrode terminal 221 and one second electrode terminal 222.

The two groups of electrode assemblies 3 are arranged in the two accommodating cavities 13 respectively. Each group of electrode assemblies includes two electrode assemblies 3 laminated in a third direction Y, each electrode assembly 3 includes a main part 31, a first battery tab 321 and a second battery tab 322. The first battery tab 321 and the second battery tab 322 have opposite polarities and are led out from the end face of the main part 31 that faces the end cover assembly 2 towards the end cover assembly 2. The first battery tabs 321 in the two groups of electrode assemblies 3 are adjacent to each other, and are all electrically connected to the first electrode terminal 221 through the first adapter 4. The second battery tabs 322 in the two groups of electrode assemblies 3 are away from each other, and are electrically connected to the second electrode terminals 222 at the corresponding positions through the second adapter 5, respectively.

As shown in FIG. 7, the second electrode terminal 222 and the second battery tab 322 are oppositely arranged, and the size of the second adapter 5 in the second direction X direction may be consistent with that of the second battery tab 322. The first adapter 4 is fastened with the two first battery tabs 321, and the first electrode terminal 221 is arranged to be opposite to the first adapter 4.

A first preset distance H1 is formed between the first end of the partition plate 12 away from the end cover assembly 2 and the bottom wall of the housing 1. The bottom wall of the housing 1 and the end cover assembly 2 are oppositely arranged in the first direction Z. The second end of the partition plate 12 adjacent to the end cover assembly 2 is lower than the end face of the main part 31 by the second preset distance H2, and the end face of the main part 31 is configured to lead out the first battery tab 321 and the second battery tab 322.

After the embodiments of the cell 100 of the present application are described in detail, a connection manner of the plurality of cells 100 in the battery 200 is described below based on the structure of the cell 100.

In some embodiments, as shown in FIGS. 10-13, the battery 200 includes a battery module 200', the battery module 200' includes a plurality of cells 100, and the plurality of cells 100 include a first cell 101 and a second cell 102 alternately arranged in parallel in the third direction Y. The third direction Y is perpendicular to the second direction X and the first direction Z, and the electrode terminals 22 of the first cell 101 and the second cell 102, which are located at the same position in the second direction X, have opposite polarities.

The various groups of electrode assemblies 3 located at the same position in the first cells 101 and the second cells 102 are sequentially connected in series to form electrode strings 3', and the electrode strings 3' located at different positions in the second direction X in the first cells 101 and the second cells 102 are arranged in parallel.

In the battery 200 according to this embodiment, the two types of cells 100 are alternately arranged in parallel in the third direction Y, the series-parallel connections of all cells 100 in the battery module 200' can be achieved through simple external circuit connection, a cell 100 having larger capacity is realized, and the requirement of the electrical device is satisfied.

The present application is described by taking an arrangement of cells 100 with different numbers in the battery module 200' as an example.

In some embodiments, as shown in FIG. 10, the battery module 200' includes two cells 100 arranged in parallel in the third direction Y, the two cells 100 are the first cell 101 and the second cell 102 respectively. Two groups of electrode assemblies 3 are arranged in parallel in the cell 100 in the second direction X.

A middle position of the first cell 101 is provided with a first electrode terminal 221, and two ends of the first cell 101 are provided with two second electrode terminals 222 respectively. The middle position of the second cell 102 is provided with a second electrode terminal 222, and two ends of the second cell 102 are provided with two first electrode terminals 221, respectively.

The second electrode terminals 222 of the first cell 101 and the second cell 102, which are located at the same end in the second direction X are electrically connected to the first electrode terminals 221 through the first connecting piece 202, thus, the two groups of electrode assemblies 3 located at the same position in the first cell 101 and the second cell 102 are connected in series to form two electrode strings 3'. For example, the first connecting piece 202 may be a connecting piece, a connecting strip, a wire, or the like. The first electrode terminal 221 and the second electrode terminal 222 located at the middle position are respectively used as two output electrodes to be led out to supply power, so as to realize the parallel connection of the two electrode strings 3'.

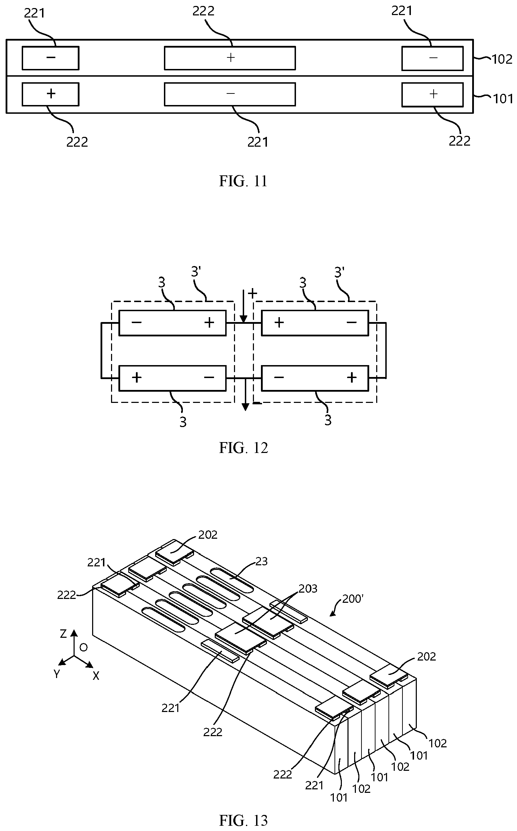

FIG. 11 illustrates a schematic polarity diagram of the battery module 200' shown in FIG. 10. The first electrode terminal 221 is a negative terminal, and the second electrode terminal 222 is a positive terminal. The electrode terminals 22 of the first cell 101 and the second cell 102, which are located at the same position in the second direction X, have opposite polarities.

FIG. 12 illustrates a schematic circuit connection diagram of the various electrode assemblies 3 in the two cells 100 shown in FIG. 11. The two electrode assemblies 3 located at the left side in the first cell 101 and the second cell 102 are connected in series through the first connecting member 202 to form the electrode string 3', and the two electrode assemblies 3 located on the right side in the first cell 101 and the second cell 102 are connected in series through the first connecting member 202 to form the other electrode string 3', and the two electrode strings 3' are connected in parallel and output electric energy through the positive terminal and the negative terminal located at the middle position.

In some other embodiments, as shown in FIG. 13, the battery module 200' includes six cells 100 arranged in parallel in the third direction Y. The six cells 100 include three first cells 101 and three second cells 102 alternately arranged in parallel in the third direction Y, and two groups of electrode assemblies 3 are arranged in parallel in the cells 100 in the second direction X.

A middle position of the first cell 101 is provided with the first electrode terminal 221, and two ends of the first cell 101 are respectively provided with two second electrode terminals 222. A middle position of the second cell 102 is provided with the second electrode terminal 222, and two ends of the second cell 101 are respectively provided with two first electrode terminals 221.

Starting from the outermost cell 100, every two adjacent first cell 101 and second cell 102 are used as cell group. In the same cell group, the first electrode terminal 221 and the second electrode terminal 222, which are located at the same side in the second direction X in the first and second cells 101 and 102 are electrically connected through the first connecting piece 202, and the first battery cell 101 and the second battery cell 102, which are adjacent to each other in two adjacent cell groups, are electrically connected through the second connecting piece 203, such that the multiple groups (six group) of electrode string 3', which are located at the same position in the second direction X in all first cells 101 and all second cells 102, are connected in series to form two electrode strings 3'. For example, the second connecting piece 203 can be a connecting piece, a connecting strip, or a wire, etc.

The first electrode terminal 221 and the second electrode terminal 222, which are located in the middle position of the two outermost battery cells 100 along the third direction Y, are respectively served as two output electrodes for providing power supply to achieve the parallel connection of the two electrode strings 3'.

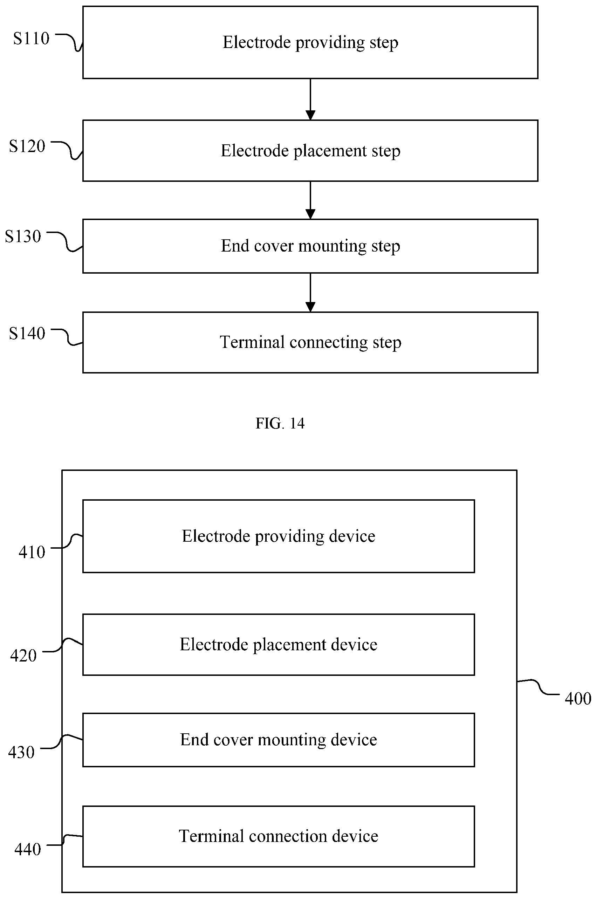

Secondly, a method for manufacturing a cell 100 is provided in the present application. In some embodiments, as shown in FIG. 14, this method for manufacturing the cell 100 includes:

an electrode providing step S 110 for providing at least two groups of electrode assemblies 3; each group of electrode assemblies 3 in the at least two groups of electrode assemblies 3 includes at least one electrode assembly 3, and the electrode assembly 3 includes a main part 31 and two kinds of battery tabs 32 having opposite polarities and led out from the main part 31;

an electrode placement step S 120 for placing at least two groups of electrode assemblies 3 in parallel in a second direction X inside the housing (1); the housing 1 has an opening 11 orientated towards the first direction Z, the second direction X is perpendicular to the first direction Z, and two adjacent battery tabs 32 in every two adjacent groups of electrode assemblies 3 have the same polarity, two kinds of battery tabs 32 being far away from each other in every two adjacent groups of electrode assemblies 3 have the same polarity;

an end cover installation step S 130 for covering the opening 11 of the housing 1 with the end cover component 2; the end cover component 2 includes an end cover body 21 and two kinds of electrode terminals 22 arranged on the end cover body 21 and having opposite polarities; and

a terminal connection step S140 of connecting two adjacent battery tabs 32 in every two adjacent groups of electrode assemblies 3 to an electrode terminal 22 having the same polarity, and connecting two kinds of battery tabs 32 being far away from each other in every two adjacent groups of electrode assemblies 3 to an electrode terminal 22 having the same polarity.

According to the method for manufacturing the cell 100 in this embodiment, the two battery tabs 32 adjacent to each other in every two adjacent electrode assemblies 3 in the cell 100 have the same polarities, and are connected in common to one electrode terminal 22 having the same polarity, which at least has the following advantages.

Firstly, the number of the electrode terminals 22 are reduced. Two kinds of battery tabs 32 having the same polarity in two adjacent groups of electrode assemblies can be connected together, the length of the connecting piece used for connecting the battery tabs 32 having the same polarity is shortened, the electrical connection structure of the cell 100 is simplified, and an internal resistance of the cell 100 is reduced either.

Secondly, the battery tabs 32 having different polarities are located in relatively independent regions in the second direction, a risk of short circuit is reduced and the safety of operation of the cell 100 is improved.

Thirdly, the battery tabs 32 having the same polarity in two adjacent groups of electrode assemblies 3 can be conveniently connected without considering an avoidance problem when battery tabs 32 having different polarities are connected. The battery tabs 32 are allowed to be bent, the space occupied by the battery tabs 32 in the first direction can be reduced, and the energy density of the cell 100 is increased.

Fourthly, due to the close distance between the battery tabs 32 having the same polarity in the two adjacent groups of electrode assemblies 3, when the battery tabs 32 are connected in common to the electrode terminals 22 having the same polarity, the distances travelled by the electrons when the electrons are transmitted to the electrode terminals through the different battery tabs 32 are closer, the heat generation may be reduced, conduction and distribution of heat are facilitated, a risk of temperature rise of the cell 100 is reduced, and the security of operation of the cell 100 is improved.

At last, a device 400 for manufacturing a cell 100 is provided in the present application. As shown in FIG. 15, the device 400 for manufacturing the cell 100 includes an electrode providing device 410, an electrode placement device 420, an end cap mounting device 430, and a terminal connection device 440.

The electrode providing device 410 is configured to provide at least two groups of electrode assemblies 3. Each group of electrode assemblies 3 in the at least two groups of electrode assemblies 3 includes at least one electrode assembly 3, and the electrode assembly 3 includes a main part 31 and two kinds of battery tabs 32 having opposite polarities and led out from the main part 31.

The electrode placement device 420 is configured to place at least two groups of electrode assemblies 3 in parallel in a second direction X inside the housing 1. The housing 1 has an opening 11 orientated towards the first direction Z, the second direction X is perpendicular to the first direction Z, and two adjacent battery tabs 32 in every two adjacent groups of electrode assemblies 3 have the same polarity, two kinds of battery tabs 32 being far away from each other in every two adjacent groups of electrode assemblies 3 have the same polarity.

The end cover mounting device 430 is configured to cover the opening 11 of the housing 1 with the end cover component 2. The end cover component 2 includes an end cover body 21 and two kinds of electrode terminals 22 arranged on the end cover body 21 and having opposite polarities.

The terminal connection device 440 is configured to connect two adjacent battery tabs 32 in every two adjacent groups of electrode assemblies 3 to an electrode terminal 22 having the same polarity, and to connect two kinds of battery tabs 32 being far away from each other in every two adjacent groups of electrode assemblies 3 to an electrode terminal 22 having the same polarity.

Although the present application has been described with reference to preferable embodiments, various modifications may be made and the components may be replaced with equivalents without departing from the scope of the present application. In particular, the technical features mentioned in the various embodiments may be combined in any manner without structural conflict. The present application is not limited to the specific embodiments disclosed herein. Instead, the present application includes all technical solutions fallen within the scope of the claims.

## Claims

1. A cell (100), **characterized in that**, the cell (100) comprises:

    a housing (1) which has an opening (11) arranged to be orientated towards a first direction (Z);

an end cover assembly (2) configured to cover the opening (11), the end cover assembly (2) comprises an end cover body (21) and two kinds of electrode terminals (22) arranged on the end cover body (21) and having opposite polarities; and

at least two groups of electrode assemblies (3) arranged in parallel in a second direction (X) perpendicular to the first direction (Z) in the housing (1); each group of the at least two groups of electrode assemblies (3) comprises at least one electrode assembly (3), and the electrode assembly (3) comprises a main part (31) and two kinds of battery tabs (32) which have opposite polarities and are led out from the main part (31);

wherein two adjacent battery tabs (32) in every two adjacent groups of electrode assemblies (3) have the same polarity and are connected in common to an electrode terminal (22) having the same polarity, and two kinds of battery tabs (32) being far away from each other in every two adjacent groups of electrode assemblies (3) have the same polarity and are connected to an electrode terminal (22) having the same polarity, respectively.

2. The cell (100) according to claim 1, wherein a sum of the number of all electrode terminals (22) in the two kinds of electrode terminals (22) is N1, and a number of the at least two groups of electrode assemblies (3) is N2, wherein N1 is an odd number greater than or equal to 3, and N2 is an even number greater than or equal to 2.

3. The cell (100) according to claim 1 or claim 2, wherein the sum of the number of all electrode terminals (22) in the two kinds of electrode terminals (22) is N1, and a number of a group of the at least two groups of electrode assemblies (3) is N2, and N1 and N2 meet a relational expression: N1-N2=1.

4. The cell (100) according to any one of claims 1-3, wherein all electrode terminals (22) of the two kinds of electrode terminals (22) are arranged to be spaced apart from each other in the second direction (X), and each electrode terminal (22) and a battery tab (32) connected to the electrode terminal (22) are oppositely arranged in the first direction (Z).

5. The cell (100) according to any one of claims 1-4, wherein the two kinds of battery tabs (32) are led out in a direction towards the end cover assembly (2).

6. The cell (100) according to any one of claims 1-5, further comprising: a first adapter (4) and a second adapter (5), wherein two adjacent battery tabs (32) in the two adjacent groups of electrode assemblies (3) are connected to an electrode terminal (22) having the same polarity through the first adapter (4), two kinds of battery tabs (32) being far away from each other in the two adjacent groups of electrode assemblies (3) are connected to an electrode terminal (22) having the same polarity through the second adapter (5), respectively.

7. The cell (100) according to any one of claims 1-6, wherein the electrode assembly (3) has a winding structure, and a winding axis (K) of the electrode assembly (3) is arranged in the first direction (Z).

8. The cell (100) according to claim 7, wherein the electrode assembly (3) has a flat surface (36) and an arc surface (37), the flat surface (36) of the electrode assembly (3) is arranged to be perpendicular to a third direction (Y), and the third direction (Y) is perpendicular to the second direction (X) and the first direction (Z), two arc surfaces (37) of every two adjacent groups of electrode assemblies (3) are oppositely arranged in the second direction (X).

9. The cell (100) according to any one of claims 1 to 6, wherein the electrode assembly (3) has a laminated structure, the electrode assembly (3) comprises a first electrode piece (33) and a second electrode piece (34) having opposite polarities and arranged to be laminated in a third direction (Y), the third direction (Y) is perpendicular to the second direction (X) and the first direction (Z).

10. The cell (100) according to any one of claims 1-9, wherein each group of electrode assemblies (3) comprises a plurality of electrode assemblies (3), the plurality of electrode assemblies (3) are arranged to be laminated in a third direction (Y), and the third direction (Y) is perpendicular to the second direction (X) and the first direction (Z).

11. The cell (100) according to any one of claims 1-10, comprising two groups of the electrode assemblies (3), wherein the two kinds of electrode terminals (22) comprise a first electrode terminal (221) and two second electrode terminals (222) arranged to be spaced in the second direction (X); the first electrode terminal (221) is arranged to be located between the two second electrode terminals (222), the two kinds of battery tabs (32) of the electrode assembly (3) comprises a first battery tab (321) and a second battery tab (322);

wherein, two first battery tabs (321) of the two groups of electrode assemblies (3) are arranged to be adjacent to each other and are connected to the first electrode terminal (221), and two second battery tabs (322) of the two groups of electrode assemblies (3) are located at two sides of the first battery tab (321) in the second direction (X), and are connected to the second electrode terminal (222) on the same side, respectively.

12. The cell (100) according to any one of claims 1-11, further comprising at least one partition plate (12) located in the housing (1), the at least one partition plate (12) is configured to separate a space in the housing (1) into at least two accommodating cavities (13) in the second direction (X), and the at least two groups of electrode assemblies (3) are correspondingly located in the at least two accommodating cavities (13).

13. The cell (100) according to claim 12, wherein at least one partition plate (12) is connected to the housing (1).

14. The cell (100) according to claim 12 or claim 13, wherein adjacent accommodating cavities (13) are interconnected with each other.

15. The cell (100) according to any one of claims 12-14, wherein a thickness of the partition plate (12) is greater than a thickness of the housing (1).

16. The cell (100) according to any one of claims 12-15, wherein a first end of the partition plate (12) being away from the end cover component (2) has a first preset distance H1 from a bottom wall of the housing (1), and the bottom wall of the housing (1) is arranged to be opposite to the end cover component (2) in the first direction (Z); and/or the two kinds of battery tabs (32) are led out towards the end cover assembly (2), and a second end of the partition plate (12) adjacent to the end cover assembly (2) is lower than an end surface of the main part (31) by a second preset distance H2; the end surface of the main part (31) is configured to lead out the two kinds of battery tabs (32).

17. The cell (100) according to any one of claims 1 to 16, wherein a ratio of a first size L1 of the cell (100) in the second direction (X) to a second size L2 of the cell (100) in the third direction (Y) is in a range between 8 and 130, wherein the third direction (Y) is perpendicular to the second direction (X) and the first direction (Z).

18. The cell (100) according to any one of claims 1 to 17, wherein the electrode assembly (3) comprises a first electrode piece (33) and a second electrode piece (34) arranged to be laminated, the second electrode piece (34) is a negative electrode piece, and a part of the negative electrode piece configured for forming the main part (31) is coated with a negative active substance, and a coating weight CW of the negative electrode active substance and a thickness THK of the housing (1) meet a relational expression listed below:

$$2.53 < 30/THK + 0.135CW < 4.53.$$

19. A battery (200), **characterized in that**, the battery (200) includes the cell (100) according to any one of claims 1-18.

20. The battery (200) according to claim 19, further comprising a battery module (200'), wherein the battery module (200') comprises a plurality of cells (100), the plurality of cells (100) comprise a first cell (101) and a second cell (102) arranged alternately in the third direction (Y); the third direction (Y) is perpendicular to the second direction (X) and the first direction (Z), the electrode terminals (22) of the first cell (101) and the second cell (102) located at the same position in the second direction (X) have opposite polarities;
wherein, all groups of electrode assemblies (3) located at the same position in the second direction (X) in the first cell (101) and the second cell (102) are sequentially connected in series to form an electrode string (3'), and all electrode strings (3') located at different positions in the second direction (X) in the first cell (101) and the second cell (102) are arranged in parallel.

21. An electrical device, **characterized in that**, the electrical device comprises the battery (200) according to claim 19 or claim 20, wherein the battery (200) is configured to provide electrical energy to the electrical device.

22. A manufacturing method for a cell (100), **characterized in that**, the manufacturing method comprises:

an electrode providing step of providing at least two groups of electrode assemblies (3); wherein each group of electrode assemblies (3) in the at least two groups of electrode assemblies (3) comprises at least one electrode assembly (3), and the electrode assembly (3) comprises a main part (31) and two kinds of battery tabs (32) having opposite polarities and led out from the main part (31);
an electrode placement step of placing at least two groups of electrode assemblies (3) in parallel in a second direction (X) inside the housing (1); wherein the housing (1) has an opening (11) orientated towards the first direction (Z), the second direction (X) is perpendicular to the first direction (Z), and two adjacent battery tabs (32) in every two adjacent groups of electrode assemblies (3) have the same polarity, two kinds of battery tabs (32) being far away from each other in every two adjacent groups of electrode assemblies (3) have the same polarity;

an end cover installation step of covering the opening (11) of the housing (1) with the end cover component (2); wherein the end cover component (2) comprises an end cover body (21) and two kinds of electrode terminals (22) arranged on the end cover body (21) and having opposite polarities;

a terminal connection step of connecting two adjacent battery tabs (32) in every two adjacent groups of electrode assemblies (3) to an electrode terminal (22) having the same polarity, and connecting two kinds of battery tabs (32) being far away from each other in every two adjacent groups of electrode assemblies (3) to an electrode terminal (22) having the same polarity.

23. A device (400) for manufacturing a cell (100), **characterized in that**, the device (400) comprises:

an electrode providing device (410) configured to provide at least two groups of electrode assemblies (3), wherein each group of electrode assemblies (3) in the at least two groups of electrode assembly (3) comprises at least one electrode assembly (3), and the electrode assembly (3) comprises a main part (31) and two kinds of battery tabs (32) having opposite polarities and led out from the main part (31);

an electrode placement device (420) configured to place at least two groups of electrode assemblies (3) in parallel in a second direction (X) inside the housing (1); wherein the housing (1) has an opening (11) orientated towards the first direction (Z), the second direction (X) is perpendicular to the first direction (Z), and two adjacent battery tabs (32) in every two adjacent groups of electrode assemblies (3) have the same polarity, two kinds of battery tabs (32) being far away from each other in every two adjacent groups of electrode assemblies (3) have the same polarity;

an end cover mounting device (430) configured to cover the opening (11) of the housing (1) with the end cover component (2); wherein the end cover component (2) comprises an end cover body (21) and two kinds of electrode terminals (22) arranged on the end cover body (21) and having opposite polarities; and

a terminal connection device (440) configured to connect two adjacent battery tabs (32) in every two adjacent groups of electrode assemblies (3) to an electrode terminal (22) having the same polarity, and to connect two kinds of battery tabs (32) being far away from each other in every two adjacent groups of electrode assemblies (3) to an electrode terminal (22) having the same polarity.

300

303

301

302

304

200

FIG. 1

200

201B

200'

201

100

201A

Z

X O Y

FIG. 2

FIG. 3

FIG. 4

222                    221                    222

Z

O  X

1

FIG. 5

222     23     221  2     21     222

A                                     A

Y

O  X

FIG. 6

A-A

5 222 322     23     321 221  321 4  100  31  5 222 322

H2

Z

O  X

3     12 H1    1     3

FIG. 7

FIG. 8

FIG. 9

FIG. 10

221  222  221

102

101

222  221  222

FIG. 11

FIG. 12

FIG. 13

S110 — Electrode providing step

S120 — Electrode placement step

S130 — End cover mounting step

S140 — Terminal connecting step

FIG. 14

410 — Electrode providing device

420 — Electrode placement device

430 — End cover mounting device

440 — Terminal connection device

400

## INTERNATIONAL SEARCH REPORT

International application No.

**PCT/CN2021/131506**

| A. | CLASSIFICATION OF SUBJECT MATTER |
|---|---|
| | H01M 10/04(2006.01)i |

According to International Patent Classification (IPC) or to both national classification and IPC

| B. | FIELDS SEARCHED |
|---|---|

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI: 电池, 电芯, 电极体, 电极组, 壳, 盖, 两, 二, 三, 端子, 电极, battery, cell, core, shell, case, housing, cap, lid, second, two, three, third, terminal, pole

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| X | US 2015093616 A1 (SAMSUNG SDI CO., LTD.) 02 April 2015 (2015-04-02) description, paragraphs 0027-0067, and figures 1-4 | 1-23 |
| A | CN 209104258 U (NINGDE CONTEMPORARY AMPEREX TECHNOLOGY CO., LTD.) 12 July 2019 (2019-07-12) entire document | 1-23 |
| A | CN 102683755 A (TIANJIN LISHEN BATTERY JOINT-STOCK CO., LTD.) 19 September 2012 (2012-09-19) entire document | 1-23 |
| A | CN 206602130 U (DONGFENG COMMERCIAL VEHICLE CO., LTD.) 31 October 2017 (2017-10-31) entire document | 1-23 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 June 2022** | **23 June 2022** |

| Name and mailing address of the ISA/CN | Authorized officer |
|---|---|
| China National Intellectual Property Administration (ISA/CN) No. 6, Xitucheng Road, Jimenqiao, Haidian District, Beijing 100088, China | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
|---|
| **PCT/CN2021/131506** |

| Patent document cited in search report | | | Publication date (day/month/year) | Patent family member(s) | | | Publication date (day/month/year) |
|---|---|---|---|---|---|---|---|
| US | 2015093616 | A1 | 02 April 2015 | KR | 20150039457 | A | 10 April 2015 |
| CN | 209104258 | U | 12 July 2019 | None | | | |
| CN | 102683755 | A | 19 September 2012 | None | | | |
| CN | 206602130 | U | 31 October 2017 | None | | | |

Form PCT/ISA/210 (patent family annex) (January 2015)